# EUROPÄISCHE PATENTSCHRIFT

(11) **EP 1 385 368 B1**
(45) Veröffentlichungstag und Bekanntmachung des Hinweises auf die Patenterteilung: **07.12.2005**
(21) Anmeldenummer: 02735063.6
(22) Anmeldetag: 07.05.2002
(51) Int. Cl.: A01G 1/00

(54) **GIESSROHR**
WATERING TUBE
TUYAU D'ARROSAGE

(30) Priorität: 08.05.2001 DE 10123096
(43) Veröffentlichungstag der Anmeldung: 04.02.2004
(73) Patentinhaber: Schwenke, Michael, 39291 Grabow (DE)
(72) Erfinder: Schwenke, Michael, 39291 Grabow (DE)
(74) Vertreter: Neuhäuser, Uwe
(86) Internationale Anmeldenummer: PCT/DE2002/001628
(87) Internationale Veröffentlichungsnummer: WO 2002/089557

(56) Entgegenhaltungen:
- CH-A- 131 526
- FR-A- 928 939
- GB-A- 708 240
- GB-A- 779 458
- US-A- 5 961 048

## Beschreibung

Die Erfindung betrifft ein Gießrohr zur künstlichen Bewässerung von Pflanzen. Ein derartiges Gießrohr wird an einem Schlauch oder eine andere Leitung zur ergiebigen und schonenden künstlichen Bewässerung von Pflanzen angeschlossen.

In regenarmen Vegetationsperioden ist es in der Landwirtschaft und im Gartenbau notwendig, die Kulturpflanzen künstlich zu bewässern.

Die FR-A-928 939 beschreibt eine allgemein bekannte Bewässerungsvorrichtung in Form einer sogenannten Gießkanne mit einem zerlegbaren und ein Lochblech aufweisenden Brausekopf. Die Formgebung des Brausekopfes ist derart, dass sich das Gehäuse desselben vom Rohransatz aus bis auf die Größe des Lochbleches mit relativ großem Erweiterungswinkel erweitert. Die kleinen Öffnungen des Lochbleches bewirken ein Anstauen des Wassers und demgemäß eine hohe Druckminderung. Es wirkt im Wesentlichen nur noch der hydrostatische Druck. Abgesehen davon, ist jedoch für jeden einzelnen aus einem Loch austretenden Wasserstrahl dennoch eine relativ hohe Strömungsgeschwindigkeit zu verzeichnen. Diese Merkmale, nämlich geringer Volumenstrom einhergehend mit hoher Strömungsgeschwindigkeit, können sich jedoch für die Bewässerung von Pflanzen als nachteilig erweisen und sind demgemäß zu vermeiden.

Zur manuellen, nichtstationär installierten Wasserverteilung sind ferner Schlauchsysteme mit vielfältigen Düsenaufsätzen, Siebeinsätzen und Zerstäubern bekannt. Alle diese Vorrichtungen bewässern die Pflanzen in einer für viele Arten schädlichen Weise von oben auf die Blätter. Dabei wird dem Erdreich i.d.R. nur unzureichend Wasser zugeführt. Prinzipbedingt kann mit einem Düsensystem nur bei Einstellung einer hohen Zerstäubungswirkung bewässert werden, ohne die Pflanzen zu gefährden. Der Wasserstrom wird dabei so stark gedrosselt, dass die Wasserversorgung uneffizient wird. Infolge dessen wird meistens nur die obere Erdschicht feucht und die Wurzeln bleiben unterversorgt. Eine aus der Praxis abgeleitete Forderung nach seltener aber dafür intensiver Bewässerung wird damit nicht erreicht. Bei einer Düseneinstellungen mit geringer Zerstäubungswirkung kann zwar der Wasserdurchsatz pro Zeiteinheit erhöht werden, aber das Wasser wird dabei so stark beschleunigt und als Strahl gebündelt, dass Pflanzenbeschädigungen oder Wurzelfreispülungen die Folge sind.

Eine derartige Vorrichtung ist beispielsweise aus der US 5,961,048 bekannt, wobei ein herkömmlicher Brausekopf mit einem Lochblech an eine Druckleitung angeschlossen ist.

Aufgabe der Erfindung ist es, eine ergiebige Wasserabgabe von einem druckbeaufschlagten System an Kulturpflanzen in einer schonenden, pflanzenverträglichen Weise und ergonomischen Art für den Bediener zu realisieren.
Diese Aufgabe wird durch ein Gießrohr mit den Merkmalen des Anspruchs 1 gelöst.

Die beschriebenen Nachteile der gebräuchlichen Bewässerungsvorrichtungen beruhen u.a. auf der zu hohen Strömungsgeschwindigkeit an den düsenförmigen Auslassöffnungen. Die damit verbundene Impulskraft ist für eine direkte Bewässerung zu groß. Die Impulskraft hängt neben den Druckverhältnissen wesentlich vom Massenstrom und der Strömungsgeschwindigkeit der Flüssigkeit ab. Zur energetisch optimalen Umwandlung von kinetischer Energie in statische Energie von Fluiden kommen zweckmäßig Diffusoren zum Einsatz. Für den hier zutreffenden Fall sind Diffusoren durch eine mäßige Querschnittserweiterung und kleine Erweiterungswinkel in Strömungsrichtung gekennzeichnet, so dass es zu keinen Ablösungserscheinungen kommt und sich ein gleichmäßiges Geschwindigkeitsprofil bildet. Zweckmäßiger Weise ist die als Diffusor ausgebildete Wasserauslassvorrichtung so geformt, dass neben den strömungsmechanischen Bedingungen auch ergonomische, wirtschaftliche und praktische Aspekte erfüllt werden.
Da bei der erfindungsgemäßen Wasserauslassvorrichtung keine Drosselorgane zum Einsatz kommen, wird die Flüssigkeit optimal verzögert, ohne den Volumenstrom zu verringern. Ein weiterer Vorteil ist, dass der Austritts-Druckverlust der Rohrleitungsanlage bzw. des Schlauchsystems in quadratischer Abhängigkeit zur Austrittsgeschwindigkeit verringert wird. Durch Verwendungen angepasster Pumpen ist eine spürbare Energieeinsparung möglich, da die benötigte Förderhöhe der Pumpe deutlich reduziert wird. Bei vorhandenen Kreiselpumpenanlagen wird eine Erhöhung des Förderstromes erreicht. Insbesondere für die Förderung aus einem Reservoir (Regenwassernutzung, Teich usw.) können leistungsschwächere Pumpen auf Niederspannungsebene zum Einsatz kommen. Hierdurch wird der Photovoltaik ein weiteres Anwendungsgebiet eröffnet.

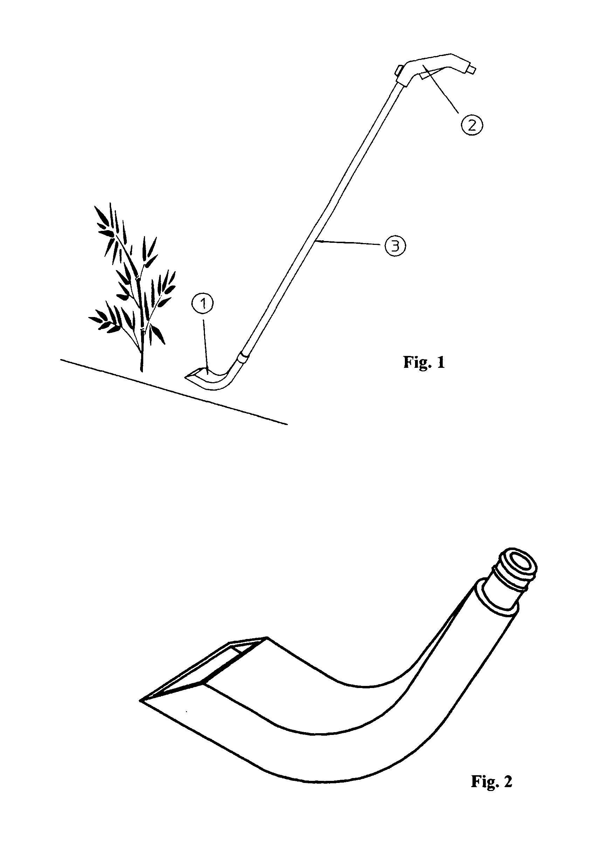

Die Erfindung kann vorrangig im Hobby-Gartenbau und im Landschaftsgartenbau eingesetzt werden. In Fig. 1 ist eine mögliche Gestaltungsvariante für den Hobbybereich skizziert. Am unteren Ende eines leichten Rohres (3) ist als Wasserauslassvorrichtung ein Diffusorteil (1) befestigt. Hier ist vorzugsweise eine schnell lösbare Verbindung zu realisieren. Die Austrittsöffnung des Diffusorteils wird so platziert, dass das Bewässerungsgerät auf dem Boden abgesetzt werden kann und das Wasser nach vom bzw. leicht nach oben austritt. Am oberen Ende des Rohres befindet sich der Haltegriff (2) mit einem Handbetätigungselement. Die Gesamtabmessungen des Gerätes sind so zu wählen, dass der Benutzer die Bewässerungsarbeiten in aufrechter Haltung ausführen kann. Das Rohr oder der Griff werden zur Durchflussanpassung mit einer Regulierungseinrichtung ausgestattet. Diese kann im einfachsten Fall durch einen Kugelhahn gebildet werden. Am Griff wird der Schlauch mittels Schnellkupplung befestigt.
Es ist sinnvoll, die Erfindung variabel und kompatibel zu bestehenden Bewässerungssystemen zu gestalten. In Figur 2 ist eine mögliche Anschlussform dargestellt, so dass das Diffusorteil an gängige Schnellkupplungen angeschlossen werden kann.
Der Gebrauchswert der Erfindung wird weiter gesteigert, wenn zusätzlich zur Hauptfunktion, mit wenigen Handgriffen weitere Anwendungsmöglichkeiten erschlossen werden. So ist es sinnvoll, konstruktive Elemente vorzusehen die eine Veränderung der Wasseraustrittsform ermöglichen. In Figur 3 ist eine mögliche Variante dargestellt, bei der ein Sieb oder Lochblech vor die Austrittsöffnung geklappt werden kann. Figur 4 stellt einen Schnitt durch eine andere mögliche Ausführungsvariante dar. Hier kann das Siebelement (4) bei Bedarf vor die Austrittsöffnung gedreht werden und wird durch den sich aufbauenden Wasserdruck gehalten. In beiden Fällen ist das Siebelement am Diffusorteil befestigt, so dass es nicht verloren geht oder versehentlich verlegt wird. In Fig. 6 ist ein möglicher Einsatz als Gartendusche dargestellt.
Die Erfindung kann für verschiedene Volumenströme dimensioniert und in unterschiedlichen Abmessungen und Materialien hergestellt werden.

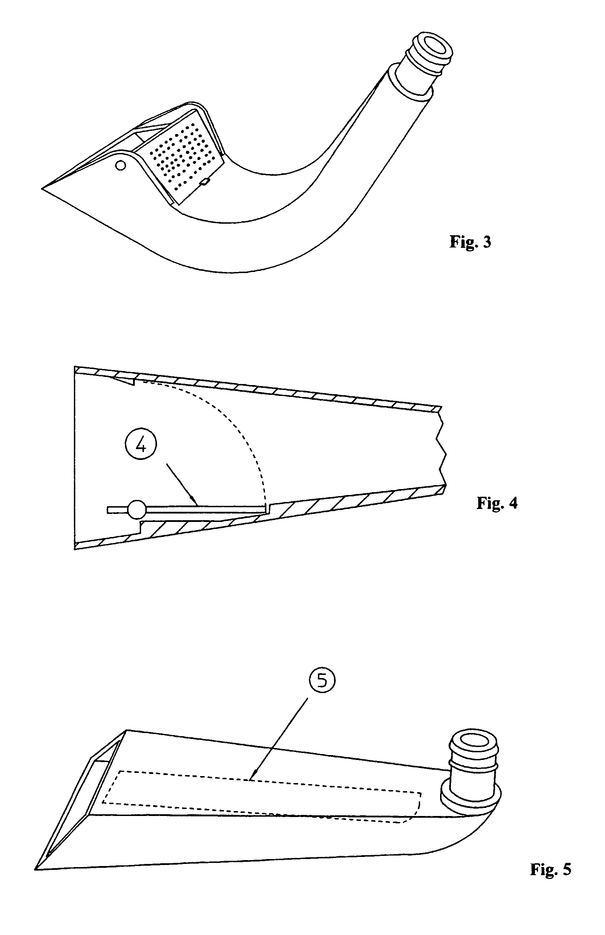

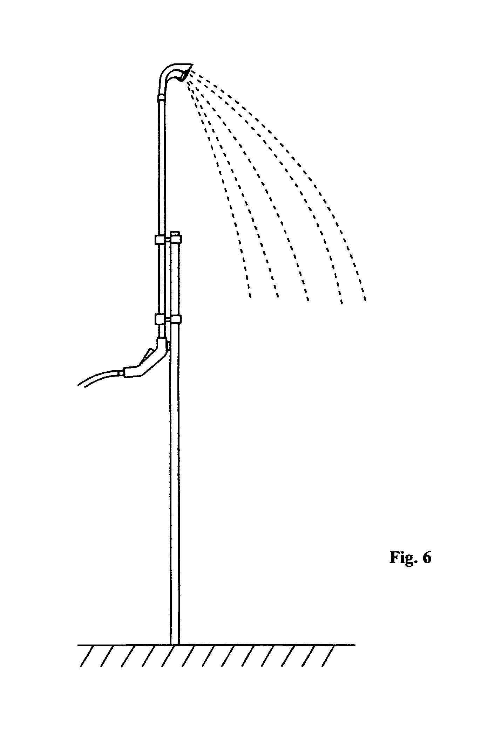

Die Fig. 1, 2, 3, 6 stellen einen Diffusorteil dar, bei dem neben der Verzögerung der Geschwindigkeit gleichzeitig eine Umlenkung der Strömung erfolgt. Die erfindungsgemäße Funktion ist aber auch durch ein gebogenes Rohrstück mit anschließend geradem Diffusorteil oder Umlenkung im Anschlussstück, wie in Figur 5 dargestellt, gegeben. Kurze Bauformen werden durch Einsatz von Leitblechen (5) realisiert, wodurch der Erweiterungswinkel vergrößert werden kann. (Multi-Diffusor).

## Patentansprüche

1. Gießrohr zur künstlichen Bewässerung von Pflanzen über ein druckbeaufschlagtes System, **dadurch gekennzeichnet, dass** das Gießrohr an seinem unteren Ende eine in Bodennähe positionierbare Wasserauslassvorrichtung in Form eines Diffusorteils (1) umfasst, vermittels dessen die Austrittsgeschwindigkeit des Wassers aus dem Diffusorteil (1) ohne Verringerung des Volumenstromes auf ein für die Pflanzen und deren Standort unschädliches Maß reduziert ist, wobei das Diffusorteil (1) eine derart mäßige Querschnittserweiterung und derart kleine Erweiterungswinkel in Strömungsrichtung aufweist, dass Ablöseerscheinungen vermieden sind und ein gleichmäßiges Geschwindigkeitsprofil gebildet ist.

2. Gießrohr nach Anspruch 1, **dadurch gekennzeichnet, dass** eine Strömungsumlenkung in dem Diffusorteil (1) selbst oder/und in Fließrichtung vor dem Diffusorteil (1) erfolgt.

3. Gießrohr nach den Ansprüchen 1 bis 2, **dadurch gekennzeichnet, dass** das Diffusorteil (1) durch eine schnell lösbare Verbindung mit dem Rohrstück (3) verbunden ist.

4. Gießrohr nach einem der vorherigen Ansprüche, **dadurch gekennzeichnet, dass** das Diffusorteil (1) in direkter Verbindung mit einem Schlauch oder einer anderen Leitung betrieben wird.

5. Gießrohr nach einem der vorherigen Ansprüche, **dadurch gekennzeichnet, dass** die Bewässerungsvorrichtung fest installiert oder transportabel verwendet wird.

6. Gießrohr nach einem der vorherigen Ansprüche, **dadurch gekennzeichnet, dass** die Bewässerungsvorrichtung als Gartendusche verwendet wird.

## Claims

1. Watering tube for artificial watering of plants via a pressurized system, **characterized in that** the watering tube comprises at its lower end a water outlet device, which can be positioned close to the ground, in the form of a diffuser part (1), by means of which the outflow rate of the water from the diffuser part (1) is reduced to a safe level for the plants and their location without reducing the volume flow, the diffuser part (1) having such a moderate cross-sectional enlargement and such small enlargement angles in the flow direction that separation phenomena are avoided and a uniform rate profile is formed.

2. Watering tube according to Claim 1, **characterized in that** flow deflection takes place in the diffuser part (1) itself or/and in front of the diffuser part (1) in the flow direction.

3. Watering tube according to Claims 1 to 2, **characterized in that** the diffuser part (1) is connected to the tube piece (3) by a rapidly releasable connection.

4. Watering tube according to one of the preceding claims, **characterized in that** the diffuser part (1) is operated in direct conjunction with a hose or another line.

5. Watering tube according to one of the preceding claims, **characterized in that** the watering device is permanently installed or used portably.

6. Watering tube according to one of the preceding claims, **characterized in that** the watering device is used as a garden shower.

## Revendications

1. Tuyau d'arrosage pour l'arrosage artificiel de plantes par le biais d'un système sous pression, **caractérisé en ce que** le tuyau d'arrosage comprend à son extrémité inférieure un dispositif de sortie d'eau pouvant être positionné à proximité du sol sous forme de pièce de diffuseur (1), au moyen duquel la vitesse de sortie de l'eau hors de la pièce de diffuseur (1) est réduite à une mesure n'endommageant pas les plantes et leur environnement sans diminuer le débit, la pièce de diffuseur (1) présentant un élargissement de section transversale important et un petit angle d'élargissement dans la direction de l'écoulement tels que les effets de décollement soient évités et qu'un profil de vitesse uniforme soit obtenu.

2. Tuyau d'arrosage selon la revendication 1, **caractérisé en ce qu'**une déflexion de l'écoulement dans la pièce de diffuseur (1) s'effectue automatiquement et/ou dans la direction du flux avant la pièce de diffuseur (1).

3. Tuyau d'arrosage selon les revendications 1 à 2, **caractérisé en ce que** la pièce de diffuseur (1) est connectée à la section de tuyau (3) par un raccord rapidement détachable.

4. Tuyau d'arrosage selon l'une quelconque des revendications précédentes, **caractérisé en ce que** la pièce de diffuseur (1) fonctionne en liaison directe avec un tuyau souple ou une autre conduite.

5. Tuyau d'arrosage selon l'une quelconque des revendications précédentes, **caractérisé en ce que** le dispositif d'arrosage est installé fixement ou est utilisé sous forme transportable.

6. Tuyau d'arrosage selon l'une quelconque des revendications précédentes, **caractérisé en ce que** le dispositif d'arrosage est utilisé sous forme de douche de jardin.
